# EUROPÄISCHE PATENTSCHRIFT

(11) **EP 3 049 729 B1**
(45) Veröffentlichungstag und Bekanntmachung des Hinweises auf die Patenterteilung: **10.10.2018**
(21) Anmeldenummer: 14752607.3
(22) Anmeldetag: 13.08.2014
(51) Int. Cl.: F24F 5/00, F24F 12/00, B60H 1/32

(54) **HEIZ-/KÜHLSYSTEM FÜR KRAFTFAHRZEUGE UND VERFAHREN ZUR KLIMATISIERUNG EINES FAHRZEUGINNENRAUMS**
HEATING/COOLING SYSTEM FOR MOTOR VEHICLES AND METHOD FOR AIR CONDITIONING A VEHICLE INTERIOR
SYSTÈME DE CHAUFFAGE/REFROIDISSEMENT POUR VÉHICULES À MOTEUR ET PROCÉDÉ DE CLIMATISATION D'UN HABITACLE

(30) Priorität: 24.09.2013 DE 102013110562
(43) Veröffentlichungstag der Anmeldung: 03.08.2016
(73) Patentinhaber: Pierburg GmbH, 41460 Neuss (DE)
(72) Erfinder: HOPP, Martin, 50858 Köln (DE); NAUSE, Fabienne, 74196 Neuenstadt am Kocher (DE); KÖHLER, Matthias, 74177 Bad Friedrichshall (DE); PATTANASHETTAR, Sateesh, 41462 Neuss (DE)
(74) Vertreter: Patentanwälte ter Smitten Eberlein-Van Hoof Rütten Partnerschaftsgesellschaft mbB
(86) Internationale Anmeldenummer: PCT/EP2014/067350
(87) Internationale Veröffentlichungsnummer: WO 2015/043821

(56) Entgegenhaltungen:
- DE-A1- 2 636 074
- DE-A1- 10 221 191

## Beschreibung

Die Erfindung betrifft ein Heiz-/Kühlsystem für Kraftfahrzeuge zur Beheizung oder Kühlung eines Fahrzeuginnenraums. Ferner betrifft die Erfindung ein Verfahren zur Klimatisierung eines Fahrzeuginnenraums.

Die Nutzung eines an einem Fahrzeug anfallenden Kondenswassers ist bekannt, insbesondere sind Systeme zur Verwendung des Kondenswassers zur Kühlung von Fahrzeugaggregaten bekannt.

Aus der DE 37 06 546 C1 ist eine Auffangschale zum Auffangen von Kondenswasser eines Verdampfers bekannt, das zur Kühlung von bestimmten Bauteilen eines Fahrzeugs verwendet werden kann. Die zu kühlenden Bauteile sind entweder innerhalb der Auffangschale angeordnet, so dass das Kondenswasser die Bauteile direkt umgibt, oder das Kondenswasser wird den zu kühlenden Bauteilen zugeführt und überströmt diese an einer Außenseite.

Die DE 10 2008 048 016 A1 beschreibt ein Auffangen, Speichern und Verwenden des Kondenswassers zur Kühlung eines Kältemittel-Kreislaufs. Dazu wird das Kondenswasser zu einem Wärmetauscher des Kältemittel-Kreislaufs geleitet.

Die DE 10 2011 005 595 A1 beschreibt ebenfalls ein Auffangen und Nutzen des Kondenswassers einer Klimaanlage eines Fahrzeuges zur Kühlung eines Verbrennungsmotors. Das durch die Kühlung des Motors erhitzte Kondenswasser wird einem Ansaugsystem des Verbrennungsmotors zugeführt oder an die Umgebung abgelassen.
Die DE 102 21 191 A1 beschreibt ein Klimatisierungsgerät mit einem Zuluft-Prozessluft-Wärmetauscher, der von einem in einen Fahrzeuginnenraum einströmenden Zuluftstrom und einem separaten Prozessluftstrom durchströmt wird, gemäß dem Oberbegriff des Anspruchs 1. Ein zusätzlicher Zuluft-Abluftluft-Wärmetauscher wird von dem Zuluftstrom und einem aus dem Fahrzeuginnenraum ausströmenden Abluftstrom durchströmt wird. Zur Steigerung des Kühleffekts wird ein Kondenswasser aufgefangen, gespeichert und stromaufwärts des Zuluft-Abluftluft-Wärmetauschers in den Abluftstrom eingebracht.
Die DE 26 36 074 A1 beschreibt ebenfalls ein Klimatisierungsgerät, bei dem zur Steigerung des Kühleffekts ein Kondenswasser stromaufwärts eines Zuluft-Abluftluft-Wärmetauschers in den Abluftstrom eingebracht wird.
Nachteilig an den bekannten Systemen ist, dass dem zur Klimatisierung des Fahrzeuginnenraums dienenden Heiz-/Kühlsystem durch Entnahme bzw. durch Abfuhr des Kondenswassers ein Teil der Kühlleistung entzogen wird und diese abgeführte Kühlleistung nicht wieder demselben System, nämlich zur Kühlung des Fahrzeuginnenraums, zur Verfügung gestellt wird, sondern für andere Kühlzwecke genutzt wird. Dadurch reduziert sich der Kühleffekt zur Kühlung des Fahrzeuginnenraums.
Der Erfindung liegt daher die Aufgabe zugrunde, ein Heiz-/Kühlsystem für Kraftfahrzeuge bereitzustellen, dass eine besonders schnelle, effektive und energiesparende Kühlung des Fahrzeuginnenraums ermöglicht. Ferner soll ein Verfahren bereitgestellt werden, mit dem ein solches Heiz-/Kühlsystem betrieben werden kann.

Die Lösung der Aufgabe erfolgt erfindungsgemäß durch ein Heiz-/Kühlsystem mit den Merkmalen des Anspruchs 1 sowie durch ein Verfahren mit den Merkmalen des Anspruchs 11.

In bekannter Weise umfasst das Heiz-/Kühlsystem für Kraftfahrzeuge zur Klimatisierung eines Fahrzeuginnenraums eine von einem Zuluftstrom in den Fahrzeuginnenraum durchströmbare Zuluftleitung und eine von einem Abluftstrom aus dem Fahrzeuginnenraum durchströmbare Abluftleitung. Der Zuluftstrom bzw. die Zuluft kann reine Frischluft, reine Umluft oder ein Mix aus Frischluft und Umluft sein. Die Zuluftleitung und die Abluftleitung sind mit einem Zuluft-Abluft-Wärmetauscher verschaltbar, über den die Zuluft mit der Abluft in einem Wärmeaustausch stehen kann. Dazu ist der Zuluft-Abluft-Wärmetauscher von der Abluft und der Zuluft durchströmbar. Die Zuluft und/oder die Abluft können jedoch auch an dem Zuluft-Abluft-Wärmetauscher vorbei geleitet werden bzw. erst stromabwärts des Zuluft-Abluft-Wärmetauschers in die Zuluftleitung bzw. in die Abluftleitung eingeleitet werden. Der Zuluft-Abluft-Wärmetauscher ist somit für bestimmte Betriebszustände von der Zuluft und/oder von der Abluft umgehbar. Das Heiz-/Kühlsystem umfasst darüber hinaus zumindest eine von einer Flüssigkeit, insbesondere einem Kondenswasser, durchströmbare Kondenswasserleitung. Das Kondenswasser kann an einem Aggregat entstehen und ein reines Kondenswasser oder auch eine Mischung aus einem Anteil Kondenswasser und einem Anteil einer weiteren Flüssigkeit sein. Beispielsweise kann das Kondenswasser einen Anteil Regenwasser, Frischwasser und/oder Scheibenwischwasser enthalten. Das Kondenswasser weist naturgemäß eine relativ geringe Temperatur auf bzw. ist kalt.

Das Heiz-/Kühlsystem weist eine Zuführeinrichtung auf, mit der die Kondenswasserleitung verschaltbar ist und über die das Kondenswasser stromaufwärts des Zuluft-Abluft-Wärmetauschers in die Abluftleitung bzw. in den Abluftstrom einbringbar ist. Die Zuführeinrichtung kann eine Leitungsabzweigung, ein Luftbefeuchter, eine Sprühvorrichtung oder eine Tropfvorrichtung sein. Durch das Einbringen des kalten Kondenswassers in den Abluftstrom kann der Abluftstrom insbesondere adiabatisch gekühlt werden. Der mit dem Kondenswasser beaufschlagte kalte Abluftstrom wird dem Zuluft-Abluft-Wärmetauscher zugeführt, in dem der Zuluftstrom Wärme an den Abluftstrom abgeben kann. Der Zuluftstrom kann hierbei auf eine bestimmte Temperatur abgekühlt werden. Die (vor-) gekühlte Zuluft kann sodann in einem Klimagerät weiter abgekühlt oder direkt in den Fahrzeuginnenraum geleitet werden. Dadurch ist eine Rückführung der als Kondenswasser entnommenen Kühlleistung zurück an das Heiz-/Kühlsystem und somit eine sehr effiziente Kühlung des Fahrzeuginnenraums möglich. Der mit dem Kondenswasser beaufschlagte Abluftstrom kann sodann über eine Ausströmeinrichtung an die Umgebung abgegeben werden. Sofern eine Kühlung des Abluftstroms mittels Einbringen des Kondenswassers nicht erwünscht ist, kann das Kondenswasser über eine Ablaufeinrichtung direkt an die Umgebung abgegeben werden, ohne in die Abluft eingebracht zu werden.

Erfindungsgemäß weist das Heiz-/Kühlsystem einen Kondenswasser-Kühlmittel-Wärmetauscher auf, über den das Kondenswasser mit einem Kühlmittel eines Kühlmittel-Kreislaufs in einem Wärmeaustausch stehen kann. Dazu kann die Kondenswasserleitung über ein Ventil mit dem Kondenswasser-Kühlmittel-Wärmetauscher verschaltet werden. Der Kondenswasser-Kühlmittel-Wärmetauscher ist sowohl von dem Kondenswasser als auch von einem Kühlmittel durchströmbar. Das Kühlmittel strömt in einem Kühlmittel-Kreislauf, der ein an sich bekannter, unter verschiedenen Fahrzeuggruppen oder -komponenten verschaltbarer Kühlmittel-Kreislauf des Fahrzeuges sein kann. Der Kühlmittel-Kreislauf kann beispielsweise mit einem Klimagerät verschaltet sein. Vorzugsweise gibt das Kondenswasser in einem Kühlbetrieb Wärme an das Kühlmittel ab und nimmt in einem Heizbetrieb Wärme von dem Kühlmittel auf.

Die zum Einbringen des Kondenswassers in den Abluftstrom vorgesehene Zuführeinrichtung kann als eine Luftbefeuchter-Vorrichtung jeglicher Art ausgebildet sein. Für eine effiziente Kühlung des Abluftstroms ist es erforderlich, dass das Kondenswasser gleichmäßig verteilt in den Abluftstrom eingebracht wird. Daher ist die Zuführeinrichtung vorzugsweise als eine Düse ausgebildet, durch die das Kondenswasser in den Abluftstrom eingesprüht werden kann. Die Düse kann eine übliche Einspritzdüse oder auch ein Ultraschallzerstäuber sein. Dadurch kann das Kondenswasser sehr fein zerstäubt in den Abluftstrom eingebracht werden, so dass die Abluft gleichmäßig befeuchtet und somit gleichmäßig gekühlt wird.

Das Heiz-/Kühlsystem, insbesondere die Kondenswasserleitung, kann zumindest einen Auffangbehälter zum Auffangen von durch Betrieb eines Aggregats entstehendem Kondenswasser aufweisen. Unter einem Aggregat sind vorliegend nicht nur sämtliche Aggregate eines Fahrzeuges sondern auch einzelne Teile oder Komponenten eines Aggregats oder Systems zu verstehen. So kann das Aggregat beispielsweise ein Wärmetauscher einer Klimaanlage oder eines Heiz-/Kühlsystems sein, an dem Kondenswasser entsteht. Vorzugsweise ist das Aggregat ein Verdampfer. Zum Auffangen des Kondenswassers ist der Auffangbehälter unterhalb des Aggregats angeordnet, so dass das Kondenswasser mittels der Schwerkraft an dem Aggregat herunterfließen und in den Behälter hinein tropfen oder fließen kann. Der Behälter kann als eine Schale oder eine Wanne ausgebildet sein. An einer Unterseite des Behälters ist zur Weiterleitung des Kondenswassers ein Ablauf in die Kondenswasserleitung angeordnet. Die Kondenswasserleitung erstreckt sich folglich vorzugsweise von einem Auffangbehälter zu der Zuführeinrichtung. Zur Regelung kann die Kondenswasserleitung über ein Ventil mit dem Auffangbehälter verschaltet werden. Besonders bevorzugt ist zur Regelung des Kondenswasserstroms zumindest ein weiteres Ventil vorgesehen, über das der Kondenswasserstrom beispielsweise zu einem Wärmetauscher und/oder zu einem Speicher und/oder zu der Zuführeinrichtung und/oder zu der Ablaufeinrichtung geleitet werden kann.

Um das Kondenswasser bzw. den Kondenswasserstrom noch besser regeln zu können, kann das Heiz-/Kühlsystem einen Speicher zum Speichern des Kondenswassers aufweisen. Dazu kann die Kondenswasserleitung mit dem Speicher verschaltet werden. Der Speicher ist vorzugsweise als ein separater Speicher ausgebildet und ist zwischen einem Auffangbehälter des Kondenswassers und der Zuführeinrichtung angeordnet. Alternativ ist der Auffangbehälter selbst als der Speicher ausgebildet. Ferner kann der Speicher vollständig oder teilweise ein üblicher Wasserspeicher des Fahrzeugs oder einer Fahrzeugkomponente sein, beispielsweise der Scheibenwischanlage. Der Speicher kann auch (thermisch-) isoliert sein, so dass die Temperatur des in dem Speicher befindlichen Kondenswassers zumindest zeitweise beibehalten werden kann. Das Kondenswasser kann dem Speicher vorzugsweise bedarfsgerecht zugeführt und/oder entnommen werden, so dass ein anfallendes Kondenswasser nicht unmittelbar genutzt werden muss. Dazu kann der Speicher mit dem Heiz-/Kühlsystem verschaltet werden, der Speicher kann insbesondere umgehbar sein. Dazu ist vorzugsweise ein Steuerventil vorgesehen, das den Kondenswasserstrom zu dem Speicher oder zu der Zuführeinrichtung bzw. der Ablaufeinrichtung leitet. Dadurch kann der Speicher bis zu einem Maximum gefüllt werden und das weiter entstehende Kondenswasser an dem Speicher vorbei geleitet werden. Das in dem Speicher gespeicherte Kondenswasser kann mittels eines Ventils je nach Bedarf aus dem Speicher ausgespeichert werden. Vorzugsweise kann der Speicher auch manuell mit Wasser gefüllt werden. Dazu weist der Speicher einen Einfüllstutzten auf, über den der Speicher mit Wasser extern befüllbar ist. Somit kann eine Kühlung des Fahrzeuginnenraums auch bei nicht entstehendem Kondenswasser, beispielsweise bei sehr trockener Umgebungsluft, wie in einer Wüste, sichergestellt werden.

In einer Ausgestaltung der Erfindung weist die Zuluftleitung einen Kondenswasser-Zuluft-Wärmetauscher auf, über den das Kondenswasser mit dem Zuluftstrom in einem Wärmeaustausch stehen kann. Dazu kann die Kondenswasserleitung über ein Ventil mit dem Kondenswasser-Zuluft-Wärmetauscher verschaltet werden. Der Kondenswasser-Zuluft-Wärmetauscher ist sowohl von dem Kondenswasser als auch von der Zuluft durchströmbar. Vorzugsweise nimmt das Kondenswasser in einem Kühlbetrieb des Fahrzeuginnenraums Wärme von der Zuluft auf. Der Kondenswasser-Zuluft-Wärmetauscher ist vorzugsweise in der Zuluftleitung stromaufwärts des Zuluft-Abluft-Wärmetauschers angeordnet. Dadurch kann der in dem Kondenswasser-Zuluft-Wärmetauscher vorgekühlte Zuluftstrom in dem sich anschließenden Zuluft-Abluft-Wärmetauscher und einem sich vorzugsweise anschließendem Klimagerät weiter gekühlt werden. Dabei kann - aufgrund der Vorkühlung der Zuluft - die in dem Zuluft-Abluft-Wärmetauscher bzw. die in einem nachgelagerten Klimagerät erforderliche Kühlleistung relativ gering sein.

In einer weiteren Ausgestaltung der Erfindung weist die Abluftleitung einen Kondenswasser-Abluft-Wärmetauscher auf, über den das Kondenswasser mit dem Abluftstrom in einem Wärmeaustausch stehen kann. Dazu kann die Kondenswasserleitung über ein Ventil mit dem Kondenswasser-Abluft-Wärmetauscher verschaltet werden. Der Kondenswasser-Abluft-Wärmetauscher ist sowohl von dem Kondenswasser als auch von der Abluft durchströmbar. Vorzugsweise nimmt das Kondenswasser in einem Kühlbetrieb des Fahrzeuginnenraums Wärme von der Abluft auf. Der Kondenswasser-Abluft-Wärmetauscher ist vorzugsweise in der Abluftleitung stromaufwärts des Abluft-Zuluft-Wärmetauschers angeordnet. Dadurch kann der in dem Kondenswasser-Abluft-Wärmetauscher vorgekühlte Abluftstrom in dem sich anschließenden Zuluft-Abluft-Wärmetauscher Wärme von der Zuluft aufnehmen. Dadurch erfolgt eine Vorkühlung der Zuluft. Somit kann - aufgrund der Vorkühlung der Zuluft - die in dem Zuluft-Abluft-Wärmetauscher bzw. die in einem nachgelagerten Klimagerät erforderliche Kühlleistung relativ gering sein.

In einer Ausgestaltung der Erfindung weist die Zuluftleitung einen Zuluft-Kühlmittel-Wärmetauscher auf, über den der Zuluftstrom mit einem Kühlmittel eines Kühlmittel-Kreislaufs in einem Wärmeaustausch stehen kann. Der Zuluft-Kühlmittel-Wärmetauscher ist sowohl von der Zuluft als auch von dem Kühlmittel durchströmbar. Der Kühlmittel-Kreislauf kann wiederum ein an sich bekannter, unter verschiedenen Fahrzeugaggregaten und/oder Fahrzeugkomponenten verschaltbarer Kühlmittel-Kreislauf sein. Insbesondere kann der Kühlmittel-Kreislauf ein Teil des Heiz-/Kühlsystems sein und mit einem Motor, einem Aggregat, einem Kältemittel-Kreislauf und/oder einer sonstigen Komponente des Fahrzeugs in einem Wärmeaustausch stehen. Vorzugsweise nimmt das Kühlmittel in einem Kühlbetrieb Wärme von der Zuluft auf und gibt in einem Heizbetrieb Wärme an die Zuluft ab.

Vorzugsweise ist in der Zuluftleitung stromabwärts des Zuluft-Abluft-Wärmetauschers ein Klimagerät angeordnet. Dadurch kann die vorgekühlte Zuluft in dem Klimagerät weiter abgekühlt werden. Das Klimagerät kann auch in bekannter Art und Weise separat betrieben werden, wobei in dieser Betriebsart die in das Klimagerät einströmende Zuluft nicht von dem Zuluft-Abluft-Wärmetauscher kommt bzw. angesaugt wird, sondern von der Umgebung des Fahrzeugs. Das Klimagerät kann zudem für bestimmte Betriebszustände von dem Zuluftstrom auch umgehbar sein, so dass die Zuluft das Klimagerät nicht durchströmt.

In einer Ausgestaltung der Erfindung weist die Abluftleitung einen Abluft-Kühlmittel-Wärmetauscher auf, über den der Abluftstrom mit einem Kühlmittel eines Kühlmittel-Kreislaufs in einem Wärmeaustausch stehen kann. Der Abluft-Kühlmittel-Wärmetauscher ist sowohl von der Abluft als auch von dem Kühlmittel durchströmbar. Der Kühlmittel-Kreislauf kann wiederum ein an sich bekannter, unter verschiedenen Fahrzeugaggregaten und/oder Fahrzeugkomponenten verschaltbarer Kühlmittel-Kreislauf sein. Vorzugsweise nimmt das Kühlmittel in einem Kühlbetrieb Wärme von der Abluft auf und gibt in einem Heizbetrieb Wärme an die Abluft ab.

Die Abluftleitung kann eine Ausströmeinrichtung aufweisen, durch die die Abluft an die Umgebung abgegeben werden kann und/oder zur Kühlung einer Fahrzeugkomponente weiter geleitet werden kann. Unter einer Fahrzeugkomponente ist vorliegend ein Elektro-Motor, ein Verbrennungsmotor, eine Batterie, eine Pumpe oder eine sonstige Komponente des Fahrzeugs zu verstehen. Zur Kühlung der Fahrzeugkomponente weist der Abluftstrom vorzugsweise trotz der Erwärmung in dem Zuluft-Abluft-Wärmetauscher eine ausreichend geringe Temperatur auf. Vorzugsweise ist die Ausströmeinrichtung derart angeordnet, dass der Abluftstrom die zu kühlende Fahrzeugkomponente überströmen kann. Ferner kann die Ausströmeinrichtung an jenem Aggregat angeordnet sein, an dem das Kondenswasser aufgefangen wird. Dadurch kann das von dem Aggregat aufgefangene und in den Abluftstrom eingebrachte Kondenswasser wiederum an eine kalte Oberfläche des Aggregats abgegeben werden. Insbesondere kann sich die in dem Abluftstrom enthaltene Feuchtigkeit an der Oberfläche des Aggregats niederschlagen, so dass ein Kondenswasser-Kreislauf gebildet wird. Ein solcher Kondenswasser-Kreislauf ist besonders vorteilhaft bei sich verändernder Umgebungsluft, insbesondere bei sehr trockener Umgebungsluft. Beispielsweise kann bei einer Fahrt durch eine Wüste ein einmal angefallenes Kondenswasser über eine große Zeitdauer zur Kühlung des Fahrzeuginnenraums wiederverwendet werden. Alternativ oder zusätzlich kann der Abluftstrom auch direkt bzw. ungenutzt an die Umgebung abgegeben werden.

Vorzugsweise ist der Zuluft-Abluft-Wärmetauscher ein Kreuzstromwärmetauscher. Dadurch ist ein besonders effizienter Wärmeaustausch zwischen Abluft und Zuluft möglich.

Das erfindungsgemäße Verfahren zur Klimatisierung eines Fahrzeuginnenraums eines Fahrzeugs umfasst die folgenden Schritte:
Ein an einem Aggregat des Fahrzeugs, insbesondere einem Verdampfer eines Kältemittel-Kreislaufs eines Heiz-/Kühlsystems, entstehendes Kondenswasser wird mittels einer Auffangeinrichtung aufgefangen. Alternativ oder zusätzlich kann neben dem anfallenden Kondenswasser auch eine weitere Flüssigkeit, beispielweise Regenwasser, an dem Fahrzeug aufgefangen werden. Das Kondenswasser ist hierbei eine Mischung aus Kondenswasser und einer weiteren Flüssigkeit.

Vor dem Einsprühen des Kondenswassers in den Abluftstrom wird das Kondenswasser zu einem Kondenswasser-Kühlmittel-Wärmetauscher geleitet, über den das Kondenswasser mit dem Kühlmittel in einem Wärmeaustausch stehen kann. Insbesondere gibt zur Kühlung des Fahrzeuginnenraums das Kondenswasser Wärme an das Kühlmittel ab. Eine Schaltung des Kondenswasserstroms zu dem Kondenswasser-Kühlmittel-Wärmetauscher erfolgt bevorzugt, sobald die Temperatur des gespeicherten Kondenswassers einen Kondenswasser-Schwellenwert überschritten hat, das heißt oberhalb des Kondenswasser-Schwellenwerts liegt, und/oder ein Kondenswasser-Temperaturdifferenz-Schwellenwert unterschritten ist. Der Kondenswasser-Temperaturdifferenz-Schwellenwert ist dabei ein von der Kondenswassertemperatur und der Umgebungstemperatur abhängiger Differenzwert und beträgt beispielsweise 5°C. Der Kondenswasser-Schwellenwert und/oder der Kondenswasser-Temperaturdifferenz-Schwellenwert können von dem Bediener des Heiz-/Kühlsystems und/oder von einem Fahrzeughersteller vorgegeben werden. Der Kondenswasser-Schwellenwert kann ein feststehender Temperaturwert oder auch ein variabler Wert sein, der in Abhängigkeit mit der an einem Klimagerät des Fahrzeugs benötigten Leistung steht. Als Beispiel beträgt der Kondenswasser-Schwellenwert 10°C. Das Kühlmittel kann in einem an sich bekannten Kühlmittel-Kreislauf strömen. Der Kühlmittel-Kreislauf kann ein Teil des Heiz-/Kühlsystems sein und mit verschiedenen Fahrzeugaggregaten und/oder Fahrzeugkomponenten für einen Wärmeaustausch verschaltet sein. Insbesondere kann der Kühlmittel-Kreislauf mit einem Motor, einem Aggregat, einem Kältemittel-Kreislauf und/oder einer sonstigen Komponente des Fahrzeugs in einem Wärmeaustausch stehen.

Das aufgefangene Kondenswasser kann über eine Kondenswasserleitung zu einem aus dem Fahrzeuginnenraum herausströmenden Abluftstrom geleitet und in den Abluftstrom eingesprüht werden, so dass der Abluftstrom aufgrund der adiabatischen Befeuchtung gekühlt wird. Das Einsprühen des Kondenswassers in den Abluftstrom erfolgt erfindungsgemäß, sobald die in dem Fahrzeuginnenraum vorliegende Temperatur einen ersten Innenraum-Schwellenwert überschritten hat, das heißt oberhalb des ersten Innenraum-Schwellenwertes liegt, und/oder ein erster Temperaturdifferenz-Schwellenwert überschritten ist. Der erste Temperaturdifferenz-Schwellenwert ist dabei ein von der Fahrzeuginnenraumtemperatur und der Umgebungstemperatur abhängiger Differenzwert, beispielsweise 5°C. Der erste Temperaturdifferenz-Schwellenwert und/oder der erste Innenraum-Schwellenwert können von einem Bediener des Heiz-/Kühlsystems und/oder von einem Fahrzeughersteller vorgegeben werden. Der erste Innenraum-Schwellenwert kann ein feststehender Temperaturwert oder auch ein variabler Wert sein, der in Abhängigkeit mit der an einem Klimagerät des Fahrzeugs benötigten Leistung steht. Als Beispiel beträgt der erste Innenraum-Schwellenwert 18°C. Sobald ein Überschreiten eines der Werte erfasst ist, wird das Kondenswasser in den Abluftstrom eingebracht.

Der mit dem Kondenswasser beaufschlagte Abluftstrom wird sodann in einen Zuluft-Abluft-Wärmetauscher geleitet, der sowohl von dem Abluftstrom als auch von einem in den Fahrzeuginnenraum hineinströmenden Zuluftstrom durchströmt wird. Dadurch kann der Abluftstrom mit dem Zuluftstrom in einen Wärmeaustausch gebracht werden. Zur Kühlung des Fahrzeuginnenraums gibt vorzugsweise der Zuluftstrom Wärme an den kalten Abluftstrom ab. In einem Heizbetrieb zur Beheizung des Fahrzeuginnenraums kann das Kondenswasser direkt an die Umgebung abgegeben werden, ohne in den Abluftstrom eingebracht zu werden. Hierbei gibt der aus dem Fahrzeuginnenraum ausströmende, insbesondere warme Abluftstrom vorzugsweise Wärme an den Zuluftstrom ab.

Das Kondenswasser kann für eine bedarfsgerechte Regelung der Kühlung in einem Speicher gesammelt und/oder gespeichert oder unmittelbar an die Umgebung abgegeben werden. Das Speichern oder das Abgeben an die Umgebung des Kondenswassers erfolgt insbesondere dann, wenn der erste Temperaturdifferenz-Schwellenwert nicht überschritten ist und/oder die in dem Fahrzeuginnenraum vorliegende Temperatur den ersten Innenraum-Schwellenwert nicht überschritten hat, das heißt unterhalb des ersten Innenraum-Schwellenwerts liegt. In diesem Zustand ist üblicherweise eine zusätzliche Kühlung mittels des Kondenswassers nicht erwünscht. In dem Speicher kann eine weitere Flüssigkeit vorgesehen sein, die dem Kondenswasser beigemischt wird. Die Flüssigkeit kann beispielsweise manuell von Hand über einen Einfüllstutzen in den Speicher gefüllt werden oder aus einer Zuleitung stammen, beispielsweise von einem Regenabscheider.

Vor dem Einsprühen des Kondenswassers in den Abluftstrom kann das Kondenswasser zu einem Kondenswasser-Zuluft-Wärmetauscher geleitet werden, über den das Kondenswasser mit dem Zuluftstrom in einem Wärmeaustausch stehen kann. Vorzugsweise gibt die Zuluft zur Kühlung des Fahrzeuginnenraums Wärme an das Kondenswasser ab. Eine Schaltung des Kondenswasserstroms zu dem Kondenswasser-Zuluft-Wärmetauscher erfolgt bevorzugt, sobald die in dem Fahrzeuginnenraum vorliegende Temperatur einen zweiten Innenraum-Schwellenwert überschritten hat, das heißt oberhalb des zweiten Innenraum-Schwellenwerts liegt und/oder ein zweiter Temperaturdifferenz-Schwellenwert überschritten ist. Der zweite Innenraum-Schwellenwert liegt oberhalb des ersten Innenraum-Schwellenwerts, der zweite Temperaturdifferenz-Schwellenwert ist größer als der erste Temperaturdifferenz-Schwellenwert. Der zweite Temperaturdifferenz-Schwellenwert ist wiederum ein von der Fahrzeuginnenraumtemperatur und der Umgebungstemperatur abhängiger Differenzwert und beträgt beispielsweise 10°C. Der zweite Innenraum-Schwellenwert liegt oberhalb des ersten Innenraum-Schwellenwertes und kann von dem Bediener des Heiz-/Kühlsystems und/oder von einem Fahrzeughersteller vorgegeben werden. Der zweite Innenraum-Schwellenwert kann ein feststehender Temperaturwert oder auch ein variabler Wert sein, der in Abhängigkeit mit der an einem Klimagerät des Fahrzeugs benötigten Leistung steht. Als Beispiel beträgt der zweite Innenraum-Schwellenwert 22°C.

Vor dem Einsprühen des Kondenswassers in den Abluftstrom kann das Kondenswasser zu einem Kondenswasser-Abluft-Wärmetauscher geleitet werden, über den das Kondenswasser mit dem Abluftstrom in einem Wärmeaustausch stehen kann. Vorzugsweise nimmt das Kondenswasser zur Kühlung des Fahrzeuginnenraums Wärme von der Abluft auf. Eine Schaltung des Kondenswasserstroms zu dem Kondenswasser-Abluft-Wärmetauscher erfolgt bevorzugt, sobald die in dem Fahrzeuginnenraum und/oder die an dem Fahrzeugaggregat vorliegende Temperatur einen dritten Innenraum-Schwellenwert überschritten hat, das heißt oberhalb des dritten Innenraum-Schwellenwerts liegt und/oder ein dritter Temperaturdifferenz-Schwellenwert überschritten ist. Der dritte Innenraum-Schwellenwert liegt oberhalb des ersten Innenraum-Schwellenwerts, der dritte Temperaturdifferenz-Schwellenwert ist größer als der erste Temperaturdifferenz-Schwellenwert. Der dritte Temperaturdifferenz-Schwellenwert ist wiederum ein von der Fahrzeuginnenraumtemperatur und der Umgebungstemperatur abhängiger Differenzwert und beträgt beispielsweise 10°C. Der dritte Innenraum-Schwellenwert liegt oberhalb des ersten Innenraum-Schwellenwertes und kann ebenfalls von dem Bediener des Heiz-/Kühlsystems und/oder von einem Fahrzeughersteller vorgegeben werden. Der dritte Innenraum-Schwellenwert kann ein feststehender Temperaturwert oder auch ein variabler Wert sein, der in Abhängigkeit mit der an einem Klimagerät des Fahrzeugs benötigten Leistung steht. Als Beispiel beträgt der dritte Innenraum-Schwellenwert 22°C.

Vorzugsweise wird der Abluftstrom nach dem Durchströmen des Zuluft-Abluft-Wärmetauschers zu einer Fahrzeugkomponente geleitet, so dass der Abluftstrom die Fahrzeugkomponente zur Kühlung überströmen kann. Unter einer Fahrzeugkomponente ist vorliegend ein Elektro-Motor, ein Verbrennungsmotor, eine Batterie, eine Pumpe oder eine sonstige Komponente des Fahrzeugs zu verstehen. Eine Schaltung des Abluftstroms hin zu der Fahrzeugkomponente erfolgt bevorzugt, sobald die Temperatur der Fahrzeugkomponente einen Fahrzeugkomponenten-Schwellenwert überschritten hat, das heißt oberhalb des Fahrzeugkomponenten-Schwellenwerts liegt. Der Fahrzeugkomponenten-Schwellenwert kann von dem Bediener des Heiz-/Kühlsystems und/oder von einem Fahrzeughersteller vorgegeben werden. Als Beispiel beträgt der Fahrzeugkomponenten-Schwellenwert 80°C. Die Fahrzeugkomponente kann durch Überströmen der Abluft gekühlt werden. Dazu weist der Abluftstrom trotz der Erwärmung in dem Zuluft-Abluft-Wärmetauscher eine zur Kühlung der Fahrzeugkomponente ausreichend geringe Temperatur auf. Alternativ oder zusätzlich kann der Abluftstrom auch direkt bzw. ungenutzt an die Umgebung abgegeben werden.

Nach dem Durchströmen des Zuluft-Abluft-Wärmetauschers wird der Zuluftstrom vorzugsweise zu einem Klimagerät geleitet, in dem der vorgekühlte Zuluftstrom weiter abgekühlt werden kann. Alternativ kann der Zuluftstrom auch direkt in den Fahrzeuginnenraum geleitet sein, ohne das Klimagerät zu durchströmen. Das Klimagerät kann in bekannter Art und Weise separat betrieben werden, wobei die in das Klimagerät einströmende Zuluft aus dem Zuluft-Abluft-Wärmetauscher und/oder von der Umgebung kommt bzw. angesaugt wird.

Nachfolgend wird die Erfindung anhand bevorzugter Ausführungsbeispiele unter Bezugnahme auf die Zeichnungen näher erläutert.
Figur 1 zeigt eine Verschaltung des Heiz-/Kühlsystems in einer schematischen Darstellung,
Figur 2 zeigt schematisch das Heiz-/Kühlsystem in einem Normal-Kühlbetrieb,
Figur 3 zeigt schematisch das Heiz-/Kühlsystem in einem Extrem-Kühlbetrieb,
Figur 4 zeigt schematisch das Heiz-/Kühlsystem in einem Vorkühlbetrieb,
Figur 5 zeigt schematisch das Heiz-/Kühlsystem in einem Energiespar-Kühlbetrieb, und
Figur 6 zeigt schematisch eine modulare Anordnung des Heiz-/Kühlsystem in einem Fahrzeug.

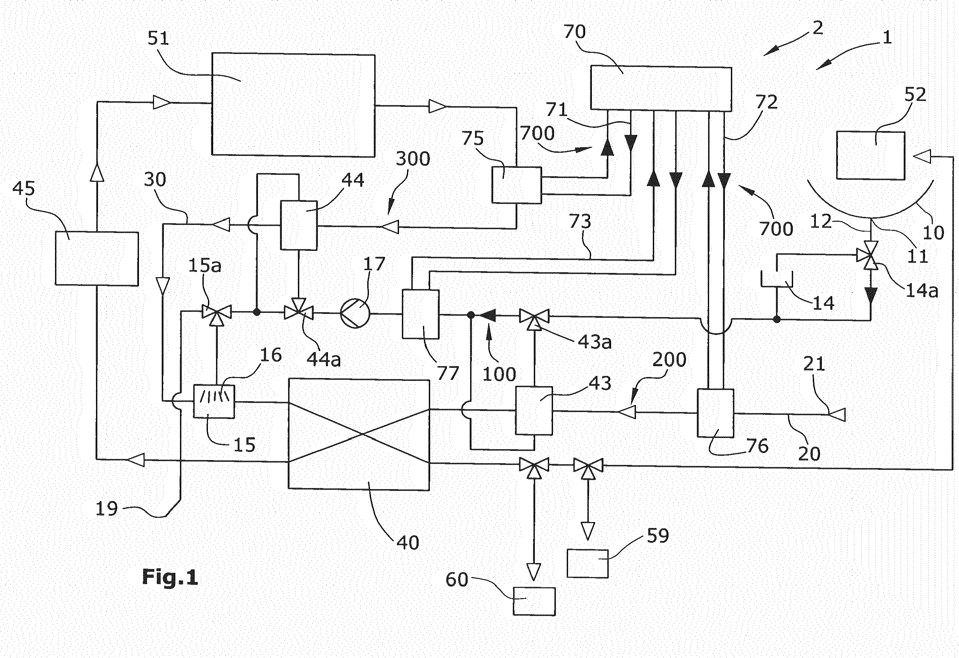

Das in der Figur 1 gezeigte Heiz-/Kühlsystem 1 umfasst eine von einem Zuluftstrom 200 in den Fahrzeuginnenraum 51 durchströmbare Zuluftleitung 20 und eine von einem Abluftstrom 300 aus dem Fahrzeuginnenraum 51 durchströmbare Abluftleitung 30. In dieser Ausführungsform sind die Zuluftleitung 20 und die Abluftleitung 30 durch einen von Luft durchströmbaren Zuluft-Abluft-Wärmetauscher 40 geführt. In dem Zuluft-Abluft-Wärmetauscher 40 können die Abluft 300 und die Zuluft 200 sowohl für einen Heizbetrieb als auch für einen Kühlbetrieb in einem Wärmeaustausch stehen.

Die Zuluftleitung 20 erstreckt sich von einem Zulufteinlass 21 durch den Zuluft-Abluft-Wärmetauscher 40 und durch ein Klimagerät 45 zu dem schematisch dargestellten Fahrzeuginnenraum 51. Die Abluftleitung 30 erstreckt sich von dem Fahrzeuginnenraum 51 durch einen Abluft-Kühlmittel-Wärmetauscher 75, einen Kondenswasser-Abluft-Wärmetauscher 44, eine Zuführeinrichtung 15 und durch den Zuluft-Abluft-Wärmetauscher 40 bis zu einer Ausströmeinrichtung 34.

An einem schematisch dargestellten Fahrzeugaggregat 52 kann aufgrund einer Temperaturdifferenz Kondenswasser 100 entstehen. Das Aggregat 52 kann jedes beliebige Aggregat eines Fahrzeuges 2 sein. Vorzugsweise ist das Aggregat 52 eine Funktionseinheit des Fahrzeuges 2, eines Fahrzeugmotors oder eines Heiz-/Kühlsystems, insbesondere ist das Aggregat 52 ein Verdampfer und/oder Luftkühler. Das Kondenswasser 100 wird über einen Auffangbehälter 10, der unterhalb des Aggregats 52 angeordnet ist, aufgefangen und über einen Ablauf 11 in eine Kondenswasserleitung 12 geleitet. Die Kondenswasserleitung 12 erstreckt sich von dem Ablauf 11 der Auffangschale 10 zu der Zuführeinrichtung 15, die in der Abluftleitung 30 angeordnet ist. Zum Fördern des Kondenswassers 100 ist eine Pumpe 17 in der Kondenswasserleitung 12 angeordnet.

Das an dem Auffangbehälter 10 aufgefangene Kondenswasser 100 kann durch die Kondenswasserleitung 12 und über das Ventil 14a zunächst zu einem Speicher 14 geleitet werden, in dem das Kondenswasser 100 gespeichert wird. Bei Bedarf, das heißt, sobald eine Kühlung des Abluftstroms 300 mittels des Kondenswasser 100 erforderlich ist, beispielsweise sobald der erste Innenraumtemperatur-Schwellenwert überschritten ist, wird das Kondenswasser 100 durch Schaltung eines Ventils 14b dem Speicher 14 entnommen und durch die Kondenswasserleitung 12 zu der Zuführeinrichtung 15 geleitet. Alternativ kann das Kondenswasser 100 auch unmittelbar von dem Auffangbehälter 10 in den Abluftstrom 300 geleitet werden. Zur Regelung der Speicherung des Kondenswassers 100 ist ein Ventil 14a in der Kondenswasserleitung 12 vorgesehen.

In einem Kühlbetrieb wird das Kondenswasser 100 durch Schalten eines Ventils 15a zu der Zuführeinrichtung 15 geleitet. Das der Zuführeinrichtung 15 zugeführte Kondenswasser 100 wird sodann in den Abluftstrom 300 eingebracht, insbesondere eingesprüht. Dazu weist die Zuführeinrichtung 15 eine Düse 16 auf. Die durch das Einsprühen des kalten Kondenswassers 100 abgekühlte Abluft 300 wird sodann in den Zuluft-Abluft-Wärmetauscher 40 geleitet, in dem die kalte Abluft 300 Wärme von der Zuluft 200 aufnehmen kann. Die Zuluft 200 wird dabei abgekühlt und kann als mäßig kalte Luft dem Fahrzeuginnenraum 51 zugeführt oder in dem Klimagerät 45 weiter abgekühlt werden. Die mit dem Kondenswasser 100 beaufschlagte Abluft 300 wird zu einer Ausströmeinrichtung 34 geleitet, über die der Abluftstrom 300 an die schematisch dargestellte Umgebung 60 oder zu weiteren Kühlzwecken an eine schematisch dargestellte Fahrzeugkomponente 59 oder das Aggregat 52 abgegeben werden kann. Dazu kann die Abluft die Fahrzeugkomponente 59 und/oder das Aggregat 52 überströmen. Das Aggregat 52 ist jenes Aggregat, an dem das Kondenswasser 100 aufgefangen wird.

In einem Extrem-Kühlbetrieb, der beispielsweise bei Überschreiten des zweiten Innenraumtemperatur-Schwellenwertes vorliegt, kann das Kondenswasser 100 über ein Ventil 43a zu einem Kondenswasser-Zuluft-Wärmetauscher 43 geleitet werden. In dem Kondenswasser-Zuluft-Wärmetauscher 43 nimmt das kalte Kondenswasser 100 zur Vorkühlung der Zuluft 200 Wärme von dem Zuluftstrom 200 auf. Sofern das Kondenswasser 100 hierbei nicht übermäßig erhitzt wird und das Kondenswasser 100 eine bestimmte Temperatur nicht überschritten hat, wird das Kondenswasser 100 zu der Zuführeinrichtung 15 geleitet, über die das Kondenswasser 100 in den Abluftstrom 300 eingesprüht wird. Bei Überschreiten einer bestimmten Temperatur wird das Kondenswasser 100 von dem Kondenswasser-Zuluft-Wärmetauscher 43 unmittelbar zu einer Ablaufeinrichtung 19 geleitet, über die das Kondenswasser 100 an die Umgebung abgegeben wird.

In einem weiteren Extrem-Kühlbetrieb, der beispielsweise ebenfalls bei Überschreiten des zweiten Innenraumtemperatur-Schwellenwertes vorliegt, kann das Kondenswasser 100 alternativ oder zusätzlich zu dem oben beschriebenen Wärmeaustausch in dem Kondenswasser-Zuluft-Wärmetauscher 40 über ein Ventil 44a zu einem Kondenswasser-Abluft-Wärmetauscher 44 geleitet werden. In dem Kondenswasser-Abluft-Wärmetauscher 44 kann das kalte Kondenswasser 100 zur Vorkühlung der Abluft 30 Wärme von dem Abluftstrom 300 aufnehmen. Anschließend kann das Kondenswasser 100 zu der Zuführeinrichtung 15 geleitet oder über die Ablasseinrichtung 19 an die Umgebung abgegeben werden.

Sofern das Kondenswasser 100 eine bestimmte Höchsttemperatur überschritten hat, beispielsweise sobald der dritte Innenraumtemperatur-Schwellenwert überschritten ist, kann das Kondenswasser 100 über einen Kondenswasser-Kühlmittel-Wärmetauscher 77 gekühlt werden. Das Kondenswasser 100 kann beispielsweise aufgrund einer längeren Speicherung in dem Speicher 14 und/oder durch eine Wärmeaufnahme in den Wärmetauschern 43, 44 stark erwärmt sein. In dem Kondenswasser-Kühlmittel-Wärmetauscher 77 kann das Kondenswasser 100 zur Kühlung Wärme an das Kühlmittel 700 abgeben.

Das Kühlmittel 700 gehört zu einem an sich bekannten und in Figur 1 schematisch dargestellten Kühlmittel-Kreislauf 70 eines Fahrzeuges 2. Das Kühlmittel 700 kann über einen Abluft-Kühlmittel-Wärmetauscher 75 mit dem Abluftstrom 300 und/oder über einen Zuluft-Kühlmittel-Wärmetauscher 76 mit dem Zuluftstrom 200 in einem Wärmeaustausch stehen. Dadurch kann der Kühl- bzw. Heizeffekt der in den Fahrzeuginnenraum 51 einströmenden Zuluft 200 weiter verstärkt werden. Ergänzend kann der Abluft-Kühlmittel-Wärmetauscher 75 als Wärmequelle in einem Heizbetrieb/Wärmepumpenbetrieb für den Kühlmittelkreislauf 70 dienen, indem dem Abluftstrom Wärme durch den Abluft-Kühlmittel-Wärmetauscher 75 entzogen wird und mittels Kühlmittelkreislauf 70 auf ein höheres Temperaturniveau im Heizbetrieb angehoben wird. Dabei anfallendes Kondensat 100 kann wiederum aufgefangen oder an die Umgebung 60 abgeführt werden.

In einem Heizbetrieb wird das aufgefangene Kondenswasser 100 über ein Ventil 15a nicht zu der Zuführeinrichtung 15, sondern direkt zu der Ablaufeinrichtung 19 geleitet. Dadurch wird der aus dem Fahrzeuginnenraum 51 ausströmende Abluftstrom 300 nicht von dem Kondenswasser 100 gekühlt und kann in dem Zuluft-Abluft-Wärmetauscher 40 Wärme an den Zuluftstrom 200 abgeben. Der erwärmte Zuluftstrom 200 kann sodann direkt dem Fahrzeuginnenraum 51 zugeführt oder in dem Klimagerät 45 und/oder in einer nicht dargestellten separaten Heizeinrichtung weiter erhitzt werden.

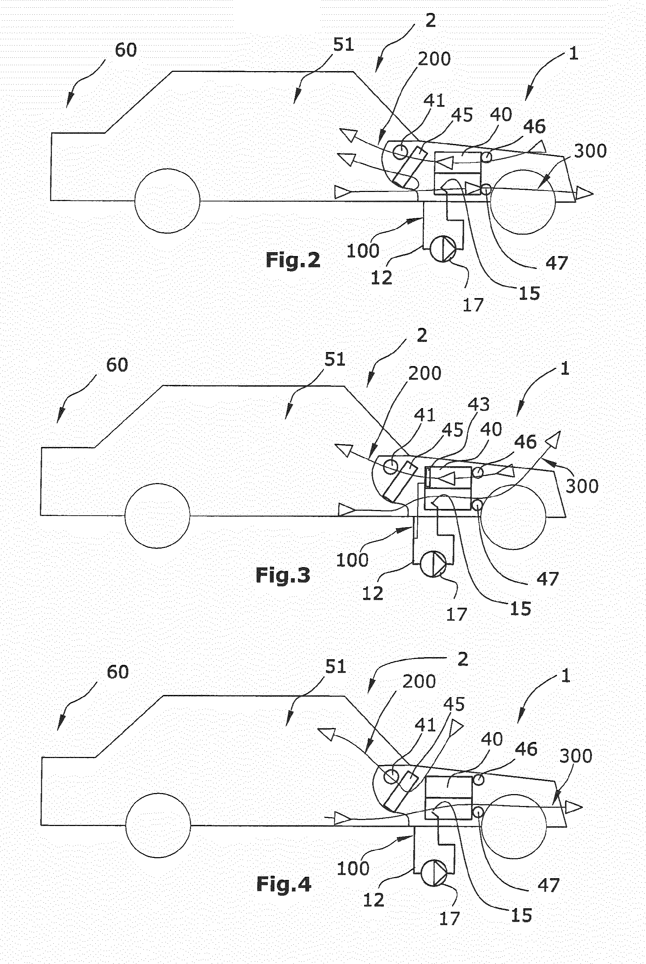

In der Figur 2 ist das Heiz-/Kühlsystem 1 in einem Normal-Kühlbetrieb gezeigt. Das Heiz-/Kühlsystem 1 ist in einem Fahrzeug 2 angeordnet und umfasst im Wesentlichen ein an sich bekanntes Klimagerät 45, einen Zuluft-Abluft-Wärmetauscher 40 sowie eine Kondenswasser-Zuführeinrichtung 15.

Über den Zuluft-Abluft-Wärmetauscher 40 kann der aus dem Fahrzeuginnenraum 51 ausströmende Abluftstrom 300 mit dem in den Fahrzeuginnenraum 51 einströmenden Zuluftstrom 200 in einem Wärmeaustausch stehen. Dazu weist der Zuluft-Abluft-Wärmetauscher 40 für den Zuluftstrom 200 und für den Abluftstrom 300 jeweils eine Luft-Fördereinrichtung 46, 47 auf. Die Zuluft-Fördereinrichtung 46 fördert die Zuluft 200 durch den Zuluft-Abluft-Wärmetauscher 40 in den Fahrzeuginnenraum 51, die Abluft-Fördereinrichtung 47 fördert Abluft 300 durch den Zuluft-Abluft-Wärmetauscher 40 zu der Umgebung 60 des Fahrzeugs 2. Grundsätzlich ist das vorliegende Heiz-/Kühlsystem 1 somit auch für einen Heizbetrieb über das Klimagerät 45 geeignet. Um bei einem Unterdruck in dem Fahrzeuginnenraum 51 ein Rückströmen der Abluft zu vermeiden, weist der Zuluft-Abluft-Wärmetauscher 40 eine nicht dargestellte Rückschlagklappe auf.

In dem Normal-Kühlbetrieb zur Kühlung des Fahrzeuginnenraums 51 nimmt der Abluftstrom 300 in dem Zuluft-Abluft-Wärmetauscher 40 Wärme von dem Zuluftstrom 200 auf. Dazu ist erforderlich, dass der Abluftstrom 300 gegenüber dem Zuluftstrom 200 eine niedrigere Temperatur aufweist. Der Zuluftstrom 200 wird daher nur in den Zuluft-Abluft-Wärmetauscher 40 geleitet, wenn die Abluft 300 kälter als die Zuluft 200 ist. Sofern dies nicht vorliegt, wird die Zuluft 200 von dem Klimagerät 45 ohne Durchströmen des Zuluft-Abluft-Wärmetauschers 40 direkt von der Umgebungsluft 60 des Fahrzeuges 2 angesaugt und gekühlt. Der Abluftstrom 300 wird mit der Kühlung des Fahrzeuginnenraums 51 nach und nach kälter. Zur Steigerung der Kühlung des Abluftstroms 300 bzw. der Effizienz des Wärmeaustausches in dem Zuluft-Abluft-Wärmetauscher 40 wird der Abluftstrom 300 vorgekühlt.

Zur Vorkühlung des Abluftstroms 300 wird ein kalter Kondenswasserstrom 100 in den Abluftstrom 300 eingebracht. Dazu wird an dem Klimagerät 45 Kondenswasser 100 aufgefangen und mittels einer Pumpe 17 durch eine Kondenswasserleitung 12 zu der Zuführeinrichtung 15 gefördert. Über die Zuführeinrichtung 15 wird das Kondenswasser 100 in den Abluftstrom 300 eingesprüht. Der dadurch vorgekühlte Abluftstrom 300 kann sodann in dem Zuluft-Abluft-Wärmetauscher 40 relativ viel Wärme von dem Zuluftstrom 200 aufnehmen, so dass der Zuluftstrom 200 gekühlt wird. Der vorgekühlte Zuluftstrom 200 wird sodann in dem Klimagerät 45 weiter gekühlt und dem Fahrzeuginnenraum 51 zugeführt.

Die durch das Klimagerät 45 strömende Zuluft 200 ist vorliegend eine Mischung aus Frischluft und Umluft, wobei die Frischluft aus einem durch den Zuluft-Abluft-Wärmetauscher 40 strömenden Frischluftteil und einem nach dem Zuluft-Abluft-Wärmetauscher 40 eingeleiteten Frischluftanteil besteht. Die Umluft wird dem Abluftstrom 300 stromaufwärts der Zuführeinrichtung 15 entnommen und dem Klimagerät 45 zugeführt. Die Umluft und ein Teil der Frischluft durchströmen daher den Zuluft-Abluft-Wärmetauscher 40 nicht. Es ist möglich, dass die Zuluft 200 nur aus der den Zuluft-Abluft-Wärmetauscher 40 nicht durchströmenden Frischluft besteht. Alternativ kann auch die gesamte Zuluft 200 durch den Zuluft-Abluft-Wärmetauscher 40 geleitet sein.

In der Figur 3 ist das Heiz-/Kühlsystem 1 in einem Extrem-Kühlbetrieb gezeigt. In diesem Fall erfolgt die Kühlung des Fahrzeuginnenraums 51 wie in dem Normal-Kühlbetrieb, jedoch wird zusätzlich das Kondenswasser 100 vor dem Einsprühen in den Abluftstrom 300 in einen Kondenswasser-Zuluft-Wärmetauscher 43 geleitet, in dem das kalte Kondenswasser 100 zur Vorkühlung der Zuluft 200 Wärme von dem Zuluftstrom 200 aufnehmen kann. Anschließend wird das Kondenswasser 100 zur weiteren Kühlung in den Abluftstrom 300 eingebracht.

In der Figur 4 ist das Heiz-/Kühlsystem 1 in einem Vorkühlbetrieb gezeigt. Der Vorkühlbetrieb wird insbesondere angewendet, wenn sich der Fahrzeuginnenraum 51, beispielsweise bei Stillstand durch Sonneneinstrahlung, derart erhitzt hat, dass der Fahrzeuginnenraum 51 wärmer als die Umgebung 60 ist.

Die Abluft 300 steht in diesem Fall für eine Kühlung des Zuluftstroms 200 nicht zur Verfügung. Ferner steht aufgrund des Stillstands an dem Klimagerät 45 ein Kondenswasser 100 nicht bereit. In diesem Fall besteht die Zuluft 200 allein aus Frischluft, die unter Umgehung des Zuluft-Abluft-Wärmetauschers 40 in den Fahrzeuginnenraum 51 geleitet und dabei in dem Klimagerät 45 gekühlt wird. Dazu dient eine Luftfördereinrichtung 41. Zusätzlich kann die Zuluft 200 auch einen Teil Umluft beinhalten. Ein Zuluftstrom 200 durch den Zuluft-Abluft-Wärmetauscher 40 erfolgt jedoch nicht. Die warme Abluft 300 kann über den Zuluft-Abluft-Wärmetauscher 40 an die Umgebung geleitet werden. Sobald die Abluft 300 abgekühlt wird und eine bestimmte Temperatur erreicht hat, kann der Zuluftstrom 200 wieder in den Zuluft-Abluft-Wärmetauschers 40 geschaltet werden.

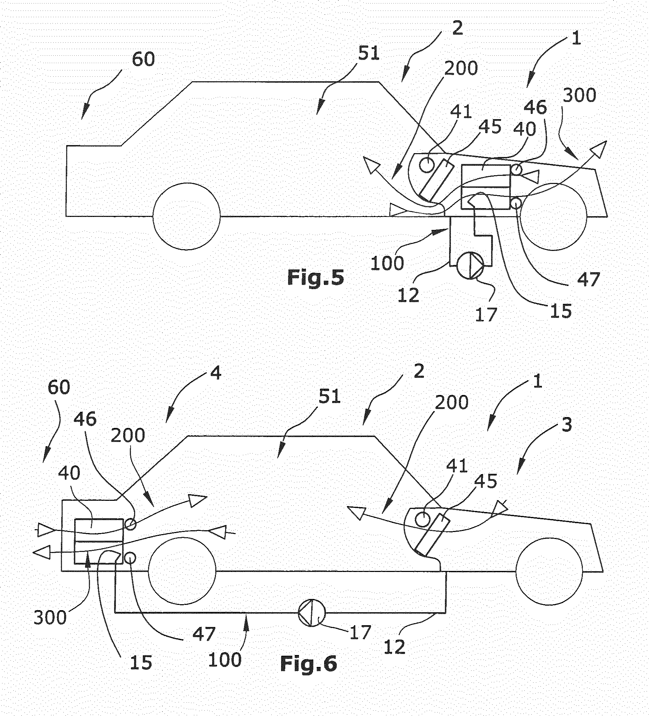

In der Figur 5 ist das Heiz-/Kühlsystem 1 in einem Energiespar-Kühlbetrieb gezeigt. Der Energiespar-Kühlbetrieb ist für eine mäßige Kühlung des Fahrzeuginnenraums 51 oder ein Halten der Temperatur in dem Fahrzeuginnenraum 51 vorgesehen. Das Klimagerät 45 ist hierbei nicht in Betrieb, so dass dieser Kühlbetrieb besonders energiesparend ist.

In dem Energiespar-Kühlbetrieb wird ein durch vorherigen Betrieb des Klimageräts 45 angefallenes und/oder in einem nicht dargestellten Speicher gespeichertes kaltes Kondenswasser 100 wird über die Zuführeinrichtung 15 in den Abluftstrom 300 eingebracht. Der gekühlt Abluftstrom 300 nimmt in dem Zuluft-Abluft-Wärmetauscher 40 Wärme von dem Zuluftstrom 200 auf, so dass der Zuluftstrom 200 abgekühlt wird. Der gekühlte Zuluftstrom 200 wird sodann direkt dem Fahrzeuginnenraum 51 zugeführt, ohne in dem Klimagerät 45 weiter gekühlt zu werden. Hierdurch kann bei einer mäßigen Temperaturdifferenz zwischen dem Fahrzeuginnernaum 51 und der Umgebung 60 eine mäßige Kühlung des Fahrzeuginnenraums 51 oder ein Halten der Temperatur in dem Fahrzeuginnenraum 51 erreicht werden.

In der Figur 6 ist ein Beispiel eines in einem Fahrzeug 2 in Form von Modulen angeordneten Heiz-/Kühlsystems 1 gezeigt. Das Heiz-/Kühlsystem 1 besteht insbesondere aus einem Frontmodul 3 und einem Heckmodul 4, welche unabhängig voneinander betrieben werden können. Das Frontmodul 3 und/oder das Heckmodul 4, insbesondere der Zuluft-Abluft-Wärmetauscher 40, können zusätzlich selbst modulartig aufgebaut sein. Beispielsweise kann der Zuluft-Abluft-Wärmetauscher 40 ein Zuluftmodul und ein Abluftmodul aufweisen. Der Zuluft-Abluft-Wärmetauscher 40 kann grundsätzlich an beliebiger Stelle in einem Fahrzeug 2 angeordnet sein.

In dem Frontmodul 3 ist ein an sich bekanntes Klimagerät 45 mit einer Luftfördereinrichtung 41 zum Fördern von Zuluft 200 in den Fahrzeuginnenraum 51 angeordnet. Das Klimagerät 45 kann, wie in Figur 2 dargestellt, in einen Umluftbetrieb schaltbar sein.

In einem Heckmodul 4 ist ein Zuluft-Abluft-Wärmetauscher 40 angeordnet, über den ein aus dem Fahrzeuginnenraum 51 ausströmender Abluftstrom 300 mit einem in den Fahrzeuginnenraum 51 einströmenden Zuluftstrom 200 in einem Wärmeaustausch stehen kann. Dazu weist der Zuluft-Abluft-Wärmetauscher 40 für den Zuluftstrom 200 und für den Abluftstrom 300 jeweils eine Luft-Fördereinrichtung 46, 47 auf.

### Referenzliste:

- 1: Heiz-/Kühlsystem
- 2: Fahrzeug
- 3: Fahrzeug-Frontbereich
- 4: Fahrzeug-Heckbereich
- 10: Auffangbehälter
- 11: Ablauf
- 12: Kondenswasserleitung
- 14: Kondenswasserspeicher
- 14a: Ventil
- 14b: Ventil
- 15: Zuführeinrichtung
- 15a: Ventil
- 16: Düse
- 17: Pumpe
- 19: Ablaufeinrichtung
- 20: Zuluftleitung
- 21: Einlasseinrichtung
- 30: Abluftleitung
- 34: Auslasseinrichtung
- 40: Zuluft-Abluft-Wärmetauscher, Luft-Luft-Wärmetauscher
- 41: Luftfördereinrichtung
- 43: Kondenswasser-Zuluft-Wärmetauscher
- 43a: Ventil
- 44: Kondenswasser-Abluft-Wärmetauscher
- 44a: Ventil
- 45: Klimagerät
- 46: Zuluft-Fördereinrichtung
- 47: Abluft-Fördereinrichtung
- 51: Fahrzeuginnenraum
- 52: Aggregat
- 59: Fahrzeugkomponente
- 60: Umgebung
- 70: Kühlmittel-Kreislauf
- 71: Kühlmittelleitung
- 72: Kühlmittelleitung
- 73: Kühlmittelleitung
- 75: Abluft-Kühlmittel-Wärmetauscher
- 76: Zuluft-Kühlmittel-Wärmetauscher
- 77: Kondenswasser-Kühlmittel-Wärmetauscher
- 100: Kondenswasser
- 200: Zuluft
- 300: Abluft
- 700: Kühlmittel

## Patentansprüche

1. Heiz-/Kühlsystem (1) für Kraftfahrzeuge zur Klimatisierung eines Fahrzeuginnenraums (51) mit einer von einem Zuluftstrom (200) in den Fahrzeuginnenraum (51) durchströmbaren Zuluftleitung (20), einer von einem Abluftstrom (300) aus dem Fahrzeuginnenraum (51) durchströmbaren Abluftleitung (30), einem mit der Zuluftleitung (20) und mit der Abluftleitung (30) verschaltbaren Zuluft-Abluft-Wärmetauscher (40) und einer von einem Kondenswasserstrom (100) durchströmbaren Kondenswasserleitung (12), wobei die Kondenswasserleitung (12) mit einer Zuführeinrichtung (15) verschaltbar ist, über die das Kondenswasser (100) stromaufwärts des Zuluft-Abluft-Wärmetauschers (40) in die Abluftleitung (30) einbringbar ist, **dadurch gekennzeichnet, dass** die Kondenswasserleitung (12) mit einem Kondenswasser-Kühlmittel-Wärmetauscher (77) verbunden ist.

2. Heiz-/Kühlsystem (1) nach Anspruch 1, **dadurch gekennzeichnet, dass** die Zuführeinrichtung (15) eine Düse (16) zum Einsprühen des Kondenswasser (100) in den Abluftstrom (300) aufweist.

3. Heiz-/Kühlsystem (1) nach einem der Ansprüche 1 oder 2, **dadurch gekennzeichnet, dass** die Kondenswasserleitung (12) mit einem Auffangbehälter (10) zum Auffangen des Kondenswassers (100) verbunden ist.

4. Heiz-/Kühlsystem (1) nach einem der voranstehenden Ansprüche, **dadurch gekennzeichnet, dass** die Kondenswasserleitung (12) mit einem Speicher (14) zum Speichern des Kondenswassers (100) verbunden ist.

5. Heiz-/Kühlsystem (1) nach einem der voranstehenden Ansprüche, **dadurch gekennzeichnet, dass** die Kondenswasserleitung (12) mit einem Kondenswasser-Zuluft-Wärmetauscher (43) verbunden ist.

6. Heiz-/Kühlsystem (1) nach einem der voranstehenden Ansprüche, **dadurch gekennzeichnet, dass** die Kondenswasserleitung (12) mit einem Kondenswasser-Abluft-Wärmetauscher (44) verbunden ist.

7. Heiz-/Kühlsystem (1) nach einem der voranstehenden Ansprüche, **dadurch gekennzeichnet, dass** die Zuluftleitung (20) mit einem Zuluft-Kühlmittel-Wärmetauscher (76) verbunden ist.

8. Heiz-/Kühlsystem (1) nach einem der voranstehenden Ansprüche, **dadurch gekennzeichnet, dass** die Zuluftleitung (20) stromabwärts des Abluft-Zuluft-Wärmetauscher (40) ein Klimagerät (45) aufweist.

9. Heiz-/Kühlsystem (1) nach einem der voranstehenden Ansprüche, **dadurch gekennzeichnet, dass** die Abluftleitung (30) mit einem Abluft-Kühlmittel-Wärmetauscher (75) verbunden ist.

10. Heiz-/Kühlsystem (1) nach einem der voranstehenden Ansprüche, **dadurch gekennzeichnet, dass** die Abluftleitung (30) eine Ausströmeinrichtung (34) aufweist, über die die Abluft (300) an die Umgebung (60), an ein Aggregat (52) und/oder an eine Fahrzeugkomponente (59) abgebbar ist.

11. Verfahren zur Klimatisierung eines Fahrzeuginnenraums (51) mit den folgenden Schritten:
- Auffangen eines durch Betrieb an einem Aggregat (52) eines Fahrzeugs (2) entstehenden Kondenswassers (100),
- Leiten des Kondenswassers (100) in einen Kondenswasser-Kühlmittel-Wärmetauscher (77), sobald die Temperatur des Kondenswassers (100) oberhalb eines Kondenswasser-Schwellenwertes liegt und/oder ein Kondenswasser-Temperaturdifferenz-Schwellenwert überschritten ist,
- Einsprühen des Kondenswassers (100) in einen aus dem Fahrzeuginnenraum (51) herausströmenden Abluftstrom (300), sobald die in dem Fahrzeuginnenraum (51) vorliegende Temperatur oberhalb eines ersten Innenraum-Schwellenwertes liegt und/oder ein erster Temperaturdifferenz-Schwellenwert überschritten ist,
- Leiten des mit dem Kondenswasser (100) beaufschlagten Abluftstroms (300) in einen Zuluft-Abluft-Wärmetauscher (40), in dem der Abluftstrom (300) mit einem in den Fahrzeuginnenraum (51) hineinströmenden Zuluftstrom (200) in einen Wärmeaustausch gebracht werden kann.

12. Verfahren nach Anspruch 11, **dadurch gekennzeichnet, dass** das Kondenswasser (100) zu einem Speicher (14) oder zu einer Ablaufeinrichtung (19) geleitet wird, sobald die in dem Fahrzeuginnenraum (51) vorliegende Temperatur unterhalb des ersten Innenraum-Schwellenwertes liegt und/oder ein erster Temperaturdifferenz-Schwellenwert unterschritten ist.

13. Verfahren nach einem der Ansprüche 11 oder 12, **dadurch gekennzeichnet, dass** das Kondenswasser (100) zu einem Kondenswasser-Zuluft-Wärmetauscher (43) geleitet wird, sobald die die in dem Fahrzeuginnenraum (51) vorliegende Temperatur oberhalb eines zweiten Innenraum-Schwellenwertes liegt und/oder ein zweiter Temperaturdifferenz-Schwellenwert überschritten ist.

14. Verfahren nach einem der Ansprüche 11 bis 13, **dadurch gekennzeichnet, dass** das Kondenswasser (100) in einen Kondenswasser-Abluft-Wärmetauscher (44) geleitet wird, sobald die in dem Fahrzeuginnenraum (51) vorliegende Temperatur oberhalb eines dritten Innenraum-Schwellenwertes liegt und/oder ein dritter Temperaturdifferenz-Schwellenwert überschritten ist.

15. Verfahren nach einem der Ansprüche 11 bis 14, **dadurch gekennzeichnet, dass** der aus dem Zuluft-Abluft-Wärmetauscher (40) austretende Abluftstrom (300) zu einer Fahrzeugkomponente (59) geleitet wird, sobald die an der Fahrzeugkomponente (59) vorliegende Temperatur oberhalb eines Fahrzeugkomponenten-Schwellenwertes liegt.

## Claims

1. Heating/cooling system (1) for motor vehicles for air conditioning a vehicle interior (51) comprising a supply air line (20) through which a supply air flow (200) can flow into the vehicle interior (51), an exhaust air line (30) through which an exhaust air flow (300) can flow from the vehicle interior (51), a supply air/exhaust air heat exchanger (40) connectable with the supply air line (20) and the exhaust air line (30), and a condensation water line (12) through which a condensation water flow (100) can flow, wherein the condensation water line (12) is connectable with a supply means (15) by means of which the condensation water (100) can be introduced into the exhaust air line (30) upstream of the supply air/exhaust air heat exchanger (40), **characterized in that** the condensation water line (12) is connected with a condensation water/coolant heat exchanger (77).

2. Heating/cooling system (1) of claim 1, **characterized in that** the supply means (15) comprises a nozzle (16) for injecting the condensation water (100) into the exhaust air flow (300).

3. Heating/cooling system (1) of one of claims 1 or 2, **characterized in that** the condensation water line (12) is connected with a collecting vessel (10) for collecting the condensation water (100).

4. Heating/cooling system (1) of one of the preceding claims, **characterized in that** the condensation water line (12) is connected with a storage (14) for storing the condensation water (100).

5. Heating/cooling system (1) of one of the preceding claims, **characterized in that** the condensation water line (12) is connected with a condensation water/supply air heat exchanger (43).

6. Heating/cooling system (1) of one of the preceding claims, **characterized in that** the condensation water line (12) is connected with a condensation water/exhaust air heat exchanger (44).

7. Heating/cooling system (1) of one of the preceding claims, **characterized in that** the supply air line (20) is connected with a supply air/coolant heat exchanger (76).

8. Heating/cooling system (1) of one of the preceding claims, **characterized in that** the supply air line (20) comprises an air conditioning device (45) downstream of the supply air/exhaust air heat exchanger (40).

9. Heating/cooling system (1) of one of the preceding claims, **characterized in that** the exhaust air line (30) is connected with an exhaust air/coolant heat exchanger (75).

10. Heating/cooling system (1) of one of the preceding claims, **characterized in that** the exhaust air line (30) comprises an outflow means (34) via which the exhaust air (300) can be discharged into the environment (60), to an aggregate (52) and/or to a vehicle component (59).

11. Method for air conditioning a vehicle interior (51), the method comprising the following steps:
- collecting condensation water (100) formed by operation at an aggregate (52) of a vehicle (2),
- guiding the condensate water (100) into a condensate water/coolant heat exchanger (77) as soon as the temperature of the condensation water (100) is above a condensation water threshold value and/or a threshold value of a condensation water temperature difference is exceeded,
- injecting the condensation water (100) into an exhaust flow (300) flowing from the vehicle interior (51), when the temperature present in the vehicle interior (51) is above a first interior threshold value and/or a first temperature difference threshold value is exceeded,
- guiding the exhaust air flow (300) charged with the condensation water (100) into a supply air/exhaust air heat exchanger (40) in which a heat exchange can be brought about between the exhaust air flow (300) and a supply flow (200) flowing into the vehicle interior (51).

12. Method of claim 11, **characterized in that** the condensation water (100) is guided to a storage (14) or to a draining means (19) when the temperature prevailing in the vehicle interior (51) is below the first interior threshold value and/or a first temperature difference threshold value is undershot.

13. Method of claim 11 or 12, **characterized in that** the condensation water (100) is guided to a condensation water/supply air heat exchanger (43) when the temperature prevailing in the vehicle interior (51) is above a second interior threshold value and/or a second temperature difference threshold value is exceeded.

14. Method of one of claims 11 to 13, **characterized in that** the condensation water (100) is guided to a condensation water/exhaust air heat exchanger (44) when the temperature prevailing in the vehicle interior (51) is above a third interior threshold value and/or a third temperature difference threshold value is exceeded.

15. Method of one of claims 11 to 14, **characterized in that** the exhaust air flow (300) leaving the supply air/exhaust air heat exchanger (40) is guided to a vehicle component (59) when the temperature prevailing at the vehicle component (59) is above a vehicle component threshold value.

## Revendications

1. Système de chauffage/refroidissement (1) pour véhicules à moteur pour la climatisation d'un habitacle (51), avec un conduit d'air puisé (20) pour l'écoulement d'un flux d'air puisé (200) dans l'habitacle (51), un conduit d'air vicié (30) pour l'écoulement d'un flux d'air vicié (30) provenant de l'habitacle (51), un échangeur thermique (40) air pulsé/air vicié apte à être relié au conduit d'air puisé (20) et au conduit d'air vicié (30), et un conduit d'eau de condensation (12) pour l'écoulement d'un flux d'eau de condensation (100), le conduit d'eau de condensation (12) pouvant être relié à un moyen d'amené (15) à travers lequel l'eau de condensation (100) peut être introduit dans le conduit d'air puisé (20) en amont dudit échangeur thermique (40) air pulsé/air vicié, **caractérisé en ce que** le conduit d'eau de condensation (12) est relié à un échangeur thermique (77) eau de condensation/réfrigérant.

2. Système de chauffage/refroidissement (1) selon la revendication 1, **caractérisé en ce que** le moyen d'amené (15) comporte une buse (16) pour injecter de l'eau de condensation (100) dans le flux d'air vicié (30).

3. Système de chauffage/refroidissement (1) selon l'une des revendications 1 ou 2, **caractérisé en ce que** le conduit d'eau de condensation (12) est relié à un récipient collecteur (10) pour collecter de l'eau de condensation (100).

4. Système de chauffage/refroidissement (1) selon l'une quelconque des revendications précédentes, **caractérisé en ce que** le conduit d'eau de condensation (12) est relié à un réservoir (14) pour accumuler l'eau de condensation (100).

5. Système de chauffage/refroidissement (1) selon l'une quelconque des revendications précédentes, **caractérisé en ce que** le conduit d'eau de condensation (12) est relié à un échangeur thermique (43) eau de condensation/air pulsé.

6. Système de chauffage/refroidissement (1) selon l'une quelconque des revendications précédentes, **caractérisé en ce que** le conduit d'eau de condensation (12) est relié à un échangeur thermique (44) eau de condensation/air vicié.

7. Système de chauffage/refroidissement (1) selon l'une quelconque des revendications précédentes, **caractérisé en ce que** le conduit d'air pulsé (20) est relié à un échangeur thermique (76) air pulsé/réfrigérant.

8. Système de chauffage/refroidissement (1) selon l'une quelconque des revendications précédentes, **caractérisé en ce que** le conduit d'air pulsé (20) présente un appareil de climatisation (45) en aval dudit échangeur thermique (40) air pulsé/air vicié.

9. Système de chauffage/refroidissement (1) selon l'une quelconque des revendications précédentes, **caractérisé en ce que** le conduit d'air vicié (30) est relié à un échangeur thermique (75) air vicié/réfrigérant.

10. Système de chauffage/refroidissement (1) selon l'une quelconque des revendications précédentes, **caractérisé en ce que** le conduit d'air vicié (30) présente un moyen de décharge (34) par lequel l'air vicié (300) peut être déchargé dans l'environnement, à un agrégat (52) et/ou à un composant du véhicule (59).

11. Procédé pour la climatisation d'un habitacle (51) avec les étapes suivantes:
- collecter de l'eau de condensation (100) produit par l'o0pération à un agrégat (52) d'une véhicule (2),
- guider l'eau de condensation (100) dans un échangeur thermique (77) eau de condensation/réfrigérant, lorsque la température de l'eau de condensation (100) est supérieure à un valeur seuil de température de l'eau de condensation et/ou un valeur seuil de différence de température de l'eau de condensation est surpassé,
- injecter l'eau de condensation (100) dans un flux d'air vicié (300) s'écoulant de l'habitacle (51), lorsque la température présente dans l'habitacle (51) est supérieure à un premier valeur seuil d'habitacle et/ou un premier valeur seuil de différence de température est surpassé,
- guider le flux d'air vicié (300) chargé avec de l'eau de condensation (100) dans un échangeur thermique (40) air pulsé/air vicié dans lequel un échange thermique peut être effectué entre le flux d'air vicié (300) et un flux d'air pulsé (200) s'écoulant dans l'habitacle (51).

12. Procédé selon la revendication 11, **caractérisé en ce que** l'eau de condensation (100) est mené à un réservoir (14) ou un moyen de drainage (19), lorsque la température présente dans l'habitacle (51) est inférieure au premier valeur seuil d'habitacle et/ou un premier valeur seuil de différence de température est sous-dépassé.

13. Procédé selon l'une des revendications 11 et 12, **caractérisé en ce que** l'eau de condensation (100) est mené à un échangeur thermique (43) eau de condensation/air pulsé, lorsque la température présente dans l'habitacle (51) est supérieure à un deuxième valeur seuil d'habitacle et/ou un deuxième valeur seuil de différence de température est surpassé.

14. Procédé selon l'une des revendications 11 à 13, **caractérisé en ce que** l'eau de condensation (100) est mené à un échangeur thermique (44) eau de condensation/air vicié, lorsque la température présente dans l'habitacle (51) est supérieure à un troisième valeur seuil d'habitacle et/ou un troisième valeur seuil de différence de température est surpassé.

15. Procédé selon l'une des revendications 11 à 16, **caractérisé en ce que** le flux d'air vicié (300) s'échappant dudit échangeur thermique (40) air pulsé/air vicié est mené à un composant du véhicule (59), lorsque la température présente au composant du véhicule (59) est supérieure à un valeur seuil du composant du véhicule.
